# EUROPÄISCHE PATENTSCHRIFT

(11) **EP 1 005 711 B1**
(45) Veröffentlichungstag und Bekanntmachung des Hinweises auf die Patenterteilung: **26.03.2003**
(21) Anmeldenummer: 98948746.7
(22) Anmeldetag: 07.08.1998
(51) Int. Cl.: H02H 3/33

(54) **FEHLERSTROM-SCHUTZEINRICHTUNG**
FAULT-CURRENT PROTECTIVE SWITCHGEAR
DISPOSITIF DE PROTECTION POUR COURANT DE FUITE

(30) Priorität: 20.08.1997 DE 19736220
(43) Veröffentlichungstag der Anmeldung: 07.06.2000
(73) Patentinhaber: SIEMENS AKTIENGESELLSCHAFT, 80333 München (DE)
(72) Erfinder: SOLLEDER, Reinhard, D-93138 Lappersdorf (DE); SCHMID, Reinhard, D-93051 Regensburg (DE); KLEEMEIER, Manfred, D-93073 Neutraubling (DE); POHL, Fritz, D-91334 Hemhofen (DE)
(86) Internationale Anmeldenummer: DE9802274
(87) Internationale Veröffentlichungsnummer: WO99009630

(56) Entgegenhaltungen:
- EP-A- 0 702 445
- REINHARD SOLLEDER: 'Warum Fehlerstrom-Schutzschalter mit netzspannungsunabhängiger Auslösung?' ETZ Bd. 107, Nr. 20, 1986, Seiten 938 - 945

## Beschreibung

Die Erfindung bezieht sich auf eine Fehlerstrom-Schutzeinrichtung.

Eine Fehlerstrom-Schutzeinrichtung (FI-Schutzeinrichtung) dient zur Sicherstellung des Schutzes gegen einen gefährlichen Körperstrom in einer elektrischen Anlage. Dies ist beispielsweise dann der Fall, wenn eine Person ein spannungsführendes Teil einer elektrischen Anlage berührt. Der Fehlerstrom fließt dann über die Person als Körperstrom gegen Erde ab. Die zum Schutz gegen gefährliche Körperströme eingesetzten Fehlerstrom-Schutzeinrichtungen trennen bei Überschreiten des sogenannten Bemessungsfehlerstromes sicher und schnell die elektrische Anlage vom Netz.

Der Aufbau einer Fehlerstrom-Schutzeinrichtung ist beispielsweise aus "etz", Band 107 (1986), Heft 20, Seiten 938 bis 945, bekannt. Dort sind insbesondere in den Bildern 1 bis 3 Prinzipschaltbilder und Funktionsprinzipien einer Fehlerstrom-Schutzeinrichtung dargestellt. Dabei werden zwei unterschiedliche Grundtypen unterschieden. Die als Fehlerstrom-Schutzschalter bezeichnete Fehlerstrom-Schutzeinrichtung entnimmt die zur Auslösung notwendige Energie netzspannungsunabhängig aus dem Fehlerstrom selbst. Beim sogenannten Differenzstrom- oder DI-Schutzschalter handelt es sich demgegenüber um eine Fehlsrstrom-Schutzeinrichtung, bei der die zum Auslösevorgang erforderliche elektrische Hilfsenergie aus dem Netz entnommen wird. Ein solcher DI-Schalter benötigt somit zu seinem Betrieb einen Netzanschluß sowie ein Netzteil, das die Netzspannung in die zum Betrieb seiner Komponenten erforderliche Versorgungsspannung umwandelt.

Von Fehlerstrom-Schutzeinrichtungen wird ein hohes Maß an Sicherheit und Zuverlässigkeit gefordert. So wird beispielsweise von der Berufsgenossenschaft der Feinmechanik und Elektrotechnik in Anlehnung an die IEC 1508 die Forderung erwogen, Fehlerstrom-Schutzeinrichtungen mit netzspannungsunabhängiger Auslösung gegen Einfachfehler mittels einer elektronischen Testung zu überprüfen. Bei dieser Überprüfung wird auf einen mit einem Schalter verbundenen Auslöser, in der Regel auf die Auslösespule eines Auslöserelais, ein Prüfimpuls gegeben und die Reaktion des Systems überprüft. Werden im System Ausfälle erkannt, so erfolgt eine bleibende Abschaltung des Systems.

Die von der Überwachungseinrichtung zum Überprüfen des Auslösers auf die Steuerleitung des Auslösers gegebenen Testsignale können jedoch durch die ebenfalls an die Steuerleitung angeschlossene Fehlerstrom-Erfassungsschaltung sowie durch in der elektrischen Anlage vorhandenen natürliche Ableitströme, die auf die Sekundärseite des Summenstromwandlers übertragen werden, verformt werden. Liegt beispielsweise bereits ein hoher berrieblicher Fehler- oder Ableitstrom vor, der jedoch kleiner ist als der Bemessungsfehlerstrom und noch nicht zum Auslösen des Auslösers ausreicht, so überlagert sich das Testsignal oder der Testimpuls dem aus dem Fehlerstrom in der Fehlerstrom-Erfassungsschaltung generierten Steuerstrom (Fehlerstromsignal) für den Auslöser. Beim Testen wird auch ein kurzzeitiger Steuerstrom (Testimpuls) für den Auslöser erzeugt, der deutlich kleiner ist als der zum Auslösen erforderliche Soll- oder Schwellwertstrom. Beim Testen kann es somit vorkommen, daß der Auslöser anspricht, weil sich Fehlerstromsignal und Testimpuls im Auslöserelais ungünstig überlagern. Auf diese Weise werden Fehlauslösungen an sich intakter Fehlerscrom-Schutzeinrichtungen herbeigeführt.

Der Erfindung liegt nun die Aufgabe zugrunde, eine Fehlerscrom-Schutzeinrichtung anzugeben, mit der eine sichere und reproduzierbare Überprüfung und Überwachung des Auslösers einer Fehlerstrom-Schutzeinrichtung im Sinne einer hohen Betriebssicherheit möglich ist.

Die genannte Aufgabe wird gelöst mit den Merkmalen des Patentanspruches 1. Eine Fehlerstrom-Schutzeinrichtung gemäß der Erfindung enthält eine Fehlerstrom-Erfassungsschaltung zum Ansteuern eines Auslösers und eine zusätzlich zu ihr geschaltete Überwachungseinrichtung zum Überprüfen des Auslösers, wobei Mittel zur elektrischen Entkopplung der Fehlerstrom-Erfassungsschaltung von der Überwachungseinrichtung vorgesehen sind. Durch diese Maßnahme ist gewährleistet, daß die von der Überwachungseinrichtung an den Auslöser weitergegebenen Testsignale unbeeinflußt von der jeweils angeschlossenen Fehlerstrom-Erfassungsschaltung und unabhängig von einem in der elektrischen Anlage aktuell fließenden Ableitstrom sind, so daß ein Größtmaß an Betriebssicherheit bei der elektrischen Überprüfung des Auslösers gewährleistet ist.

Die Erfindung kann für alle bekannten Ausführungsarten von Auslöserelais und Fehlerstrom-Erfassungsschaltungen, beispielsweise selektive, kurzzeitverzögerte oder frequenzunabhängige Fehlerstrom-Erfassungsschaltungen, eingesetzt werden.

Vorzugsweise ist zur elektrischen Entkopplung eine Entkopplungsschaltung mit einem Schwellwertschalter vorgesehen. Durch diese Maßnahme ist sichergestellt, daß die Fehlerstrom-Erfassungsschaltung solange keine elektrischen Steuersignale an die zum Auslöser führende Steuerleitung abgibt, bis ein vorgegebenes Auslösekriterium erfüllt ist. Mit anderen Worten: Betriebliche Ableitströme unterhalb des Nennfehlerstroms erzeugen keine Steuersignale auf der zum Auslöser führenden Steuerleitung, die ihrerseits die von der Überwachungseinrichtung auf die Steuerleitung abgegebene Testsignale überlagern und damit verformen können. Die Überprüfung des Auslösers ist somit solange unbeeinflußt vom aktuellen Zustand der elektrischen Anlage, solange die Auslösebedingung in der Fehlerstrom-Erfassungsschaltung nicht erfüllt ist.

Zur weiteren Erläuterung der Erfindung wird auf das Ausführungsbeispiel der Zeichnung verwiesen, in deren einziger Figur eine Fehlerstrom-Schutzeinrichtung gemäß der Erfindung in einem Blockschaltbild veranschaulicht ist.

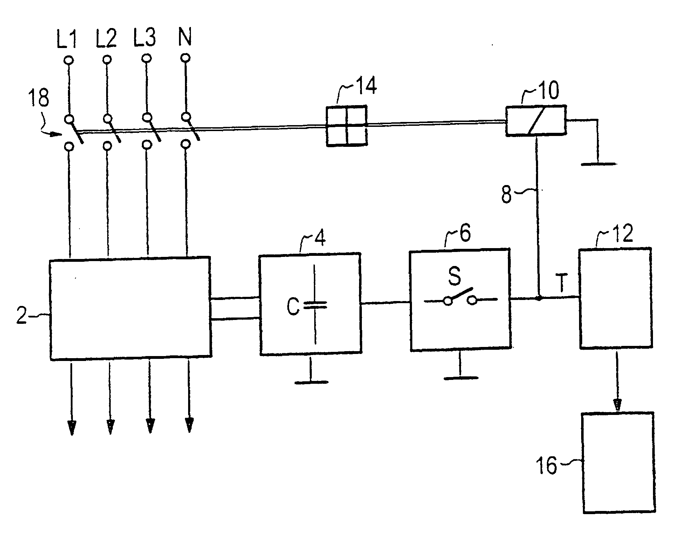

Gemäß Fig. 1 ist einem mehrphasigen Netz L1, L2, L3, N ein Summenstromwandler 2 zugeordnet, dem eine Fehlerstrom-Erfassungsschaltung 4 nachgeordnet ist, in der das in einer Sekundärwicklung des Summenstromwandlers 2 erzeugte Spannungssignal gleichgerichtet und in einem Kondensator C, gespeichert wird. Der Fehlerstrom-Erfassungsschaltung 4 ist eine Entkopplungsschaltung 6 nachgeschaltet, die einen Schwellwertschalter S enthält, wie er beispielsweise in der europäischen Offenlegungsschrift 0 702 445 A1 näher dargestellt ist. Der Schwellwertschalter S leitet die im Speicherkondensator C gespeicherte Energie erst dann über eine Steuerleitung 8 an einen Auslöser 10, beispielsweise ein Auslöserelais, weiter, wenn diese gespeicherte Energie einen vorbestimmten Wert überschreitet.

Die Fehlerstrom-Erfassungsschaltung 4 ist somit solange elektrisch von der Steuerleitung 8 entkoppelt oder getrennt, solange der in der elektrischen Anlage fließende Ableit- oder Fehlerstrom die zum Schließen des Schwellwertschalters S erforderliche Auslösebedingung nicht erfüllt.

Zusätzlich zur Fehlerstrom-Erfassungsschaltung 4 ist eine Überwachungseinrichtung 12 geschaltet, die von einem in der Figur nicht dargestellten Netzteil mit Spannung versorgt wird. Die Überwachungseinrichtung 12 ist mit einem Signalausgang an die von der Fehlerstrom-Erfassungsschaltung 4 zum Auslöser 10 führende Steuerleitung 8 angeschlossen und generiert am Signalausgang Testimpulse oder Testsignale T, die auf die Steuerleitung 8 ausgegeben werden und mit denen der Auslöser 10 auf seine Funktionstüchtigkeit überprüft wird.

Durch die Entkopplungsschaltung 6 bleiben somit die von der Überwachungseinrichtung 12 generierten und auf die Steuerleitung 8 gegebenen Testimpulse T solange unbeeinflußt von der internen Beschaltung der Fehlerstrom-Erfassungsschaltung 4 einerseits und vom aktuellen in der elektrischen Anlage herrschenden Ableitstrom andererseits, solange dieser die erforderliche Auslösebedingung des Schwellwertschalters S nicht erfüllt.

Der Auslöser 10 ist mechanisch mit einem Schaltschloß 14 gekoppelt, welches auf ein Kontaktsystem 18 wirkt dessen Schaltzustand von der Überwachungseinrichtung 12 überwacht werden kann. Führt ein von der Überwachungseinrichtung 12 auf die Steuerleitung 8 gegebener Testimpuls T nicht zu einem ordnungsgemäßen Verhalten des Auslösers 10, so erfolgt beispielsweise in einer optischen Anzeigeeinrichtung 16 eine optische Störmeldung.

## Patentansprüche

1. Fehlerstrom-Schutzeinrichtung mit einer Fehlerstrom-Erfassungsschaltung (4) zum Ansteuern eines Auslösers (10) über eine Steuerleitung (8) und mit einer zusätzlich mit der Steuerleitung (8) des Auslösers (10) verbundenen Überwachungseinrichtung (12) zum Überprüfen des Auslösers (10), wobei Mittel (6) zur elektrischen Entkopplung der Fehlerstrom-Erfassungsschaltung (4) von der Steuerleitung (8) des Auslösers (10) vorgesehen sind derart, daß die Fehlerstrom-Erfassungsschaltung (4) solange keine elektrischen Steuersignale an die zum Auslöser (10) führende Steuerleitung (8) abgibt, bis ein vorgegebenes Auslösekriterium erfüllt ist.

2. Fehlerstrom-Schutzeinrichtung nach Anspruch 1, bei der zur elektrischen Entkopplung eine Entkopplungsschaltung (6) mit einem Schwellwertschalter (S) vorgesehen ist.

## Claims

1. Residual current device with a residual-current detection circuit (4) for actuating a release (10) via a control line (8) and with a monitoring device (12), for checking the release (10), connected additionally to the control line (8) of the release (10), whereby means (6) for electrically decoupling the residual current detection circuit (4) from the control line (8) of the release (10) are provided so that the residual current detection circuit (4) does not emit any electrical control signals to the control line (8) leading to the release (10) until a predefined tripping criterion is satisfied.

2. Residual current device according to Claim 1, the decoupling device (6) including a threshold-value switch (S) for electrical decoupling.

## Revendications

1. Dispositif de protection contre courant de fuite comportant un circuit de détection de courant de fuite (4) pour la commande d'un déclencheur (10) par l'intermédiaire d'une ligne de commande (8) et un dispositif de surveillance (12) relié en plus à la ligne de commande (8) du déclencheur (10) et destiné à tester le déclencheur (10), des moyens (6) étant prévus pour le découplage électrique entre le circuit de détection de courant de fuite (4) et la ligne de commande (8) du déclencheur (10) de telle sorte que le circuit de détection de courant de fuite (4) ne délivre pas de signaux de commande électriques à la ligne de commande (8) menant au déclencheur (10) tant qu'un critère de déclenchement prescrit n'est pas satisfait.

2. Dispositif de protection contre courant de fuite selon la revendication 1, dans lequel un circuit de découplage (6) avec un interrupteur à valeur de seuil (S) est prévu pour le découplage électrique.
